# EUROPEAN PATENT SPECIFICATION

(11) **EP 1 899 944 B1**
(45) Date of publication and mention of the grant of the patent: **11.04.2012**
(21) Application number: 06720630.0
(22) Date of filing: 07.02.2006
(51) Int. Cl.: G09G 3/32, G05F 1/40, G05F 1/56, H02M 3/156

(54) **AUTOMATIC VOLTAGE SELECTION FOR SERIES DRIVEN LEDS**
AUTOMATISCHE SPANNUNGSAUSWAHL FÜR SERIENGESTEUERTE LEDS
SELECTION AUTOMATIQUE DE TENSION POUR DEL MISES SOUS TENSION EN SERIE

(30) Priority: 07.02.2005 US 650925 P; 07.02.2005 US 650945 P
(43) Date of publication of application: 19.03.2008
(73) Proprietor: Analog Devices, Inc., Norwood, MA 02062 (US)
(72) Inventor: SHAMI, Hassan, B., Tracy, California 95377 (US); WHITWORTH, Adam, J., Los Altos, California 94024 (US)
(74) Representative: Beck, Simon Antony
(86) International application number: PCT/US2006/004767
(87) International publication number: WO 2006/086652

(56) References cited:
- US-A- 5 783 934
- US-A- 5 808 506
- US-A1- 2001 043 113
- US-A1- 2002 047 642
- US-A1- 2004 207 463
- US-A1- 2004 233 144
- US-B1- 6 417 736
- US-B2- 6 538 394
- US-B2- 6 628 252
- US-B2- 6 836 157

## Description

The present invention relates to a method and an apparatus for controlling a drive voltage for driving a load.

In embodiments, the present invention relates to power management and more particularly to power management of LED driver circuits.

Cellular telephones, handheld computers, portable game terminals and other battery-powered devices commonly use Liquid Crystal Display ("LCD") technology to permit users to receive text and graphics information. LCDs often use light emitting diodes ("LEDs") for backlighting a displayable area to improve display readability. White LEDs ("WLEDs") are often used in such arrangements for reasons of space and power usage. However, LEDs operate only when a sufficient voltage is available and illumination intensities tend to vary perceptibly with changes in voltage levels.

A common approach to maintaining consistent illumination levels utilizes boost regulators (also known as boost switchers) to assure that LEDs are powered at adequate voltage levels. Current sources are used in conjunction with boost regulators to drive the LEDs with a constant current. LEDs are commonly driven in series and the voltage and currents required to drive the LEDs are calculated based on the voltage of operation of each LED at a desired current level and minimum voltage requirements of the current source. Usually, the voltage provided by the boost regulator is greater than the calculated required voltage to allow for variations in operating characteristics of the driver and LED circuits. It will be appreciated that the efficiency of the circuit is largely dependent on the difference in voltage required to drive the LEDs and the voltage, provided by the boost regulator, the difference hereinafter referred to as "headroom voltage." The headroom voltage may generally be measured across the current source.

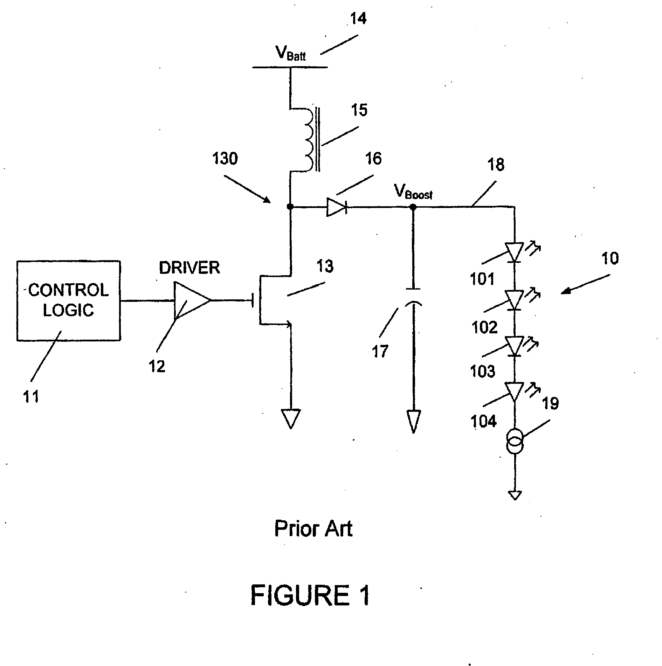

Referring to Figure 1, a representation of a prior art voltage booster is shown. An LED load 10 comprising LEDs 101, 102, 103 and 104 is driven by a boosted voltage maintained on a capacitor 17. The boosted voltage 18 is derived from a battery voltage 14 using an FET 13 that is switched at a predetermined frequency using control logic 11. The control logic 11 alternately drives the FET 13 ON and OFF using driver 12 such that, when ON a current flows through the FET 13 and an inductor 15; when OFF no current flows through the FET 13 and a transient increase in drain voltage 130 is observed due to the operation of the inductor 15. This increase in drain voltage causes the capacitor 17 to be charged through a diode 16. At some point, the drain voltage falls to a level that reverse biases the diode 16. The values of the inductor 15 and capacitor 17 are selected such that the voltage measured across the capacitor (boost voltage) 18 achieves a desired level sufficient to drive the LED load 10. Further, the frequency at which the FET 13 is switched is selected to maintain the boost voltage within an operating range sufficient to support the LED load 10. A current source 19 is used to provide a constant current to the plurality of LEDs 10. In the prior art, LED driver circuits provide a voltage output to connect to a first end of the plurality of LEDs 10 and a current source input is provided separately for connecting to the other end of the plurality of LEDs 10.

As currently implemented, boost regulators suffer from inefficiencies associated with the fixing of the voltage level required to drive an LED load. By fixing voltage output of the boost regulator, it becomes difficult to modify the electrical characteristics of the LED load and maintain power efficiency. For example, reduction of a number of series connected LEDs in the LED load 10 may result in power losses in the associated current source causing greater power dissipation and heat generation. An increase in the number of LEDs in the LED load 10 may result in lower LED illumination and flickering LEDs.

In applications involving portable, battery-operated devices, this loss of efficiency and degraded performance may hinder marketability of the devices. Additionally, the provision of both a voltage supply pin and a current source or sink pin adds to chip complexity, current handling requirements and heat dissipation. Further, the substitution of LED types in a production environment may result in performance degradations and undesirable side effects. For example, replacing an LED type to obtain brighter or differently colored LEDs may result in lower LED operating voltages and increased inefficiency of the voltage booster circuit. Conversely, an increase in the LED operating voltage may decrease or eliminate the headroom voltage and result in reduced operating current and an associated reduction in LED output.
US-B-6417736 discloses a monolithic integrated circuit amplifier having a gain stage and a buffer stage.
US-A-2004/0207463 discloses an active filter for reducing the common mode current in a pulse width modulated drive circuit driving a load.
US-A-2001/0043113 discloses an LED drive circuit including a booster circuit having first and second capacitors and using n/m voltage type rectifying switching and a constant current circuit having a MOS transistor and an output transistor. The constant current circuit is connected in series with an LED as a load of the booster circuit to drive the LED with constant current.

According to a first aspect of the present invention, there is provided a method for controlling a drive voltage for driving a load comprising the steps of: providing a drive voltage to a current source, the current source driving a load and positioned electrically between the drive voltage and the load; characterised by: measuring a headroom voltage across the current source; and, adjusting the drive voltage to maintain the headroom voltage within preferred maximum and minimum voltage levels.

According to a second aspect of the present invention, there is provided an apparatus for controlling a drive voltage for driving a load, the apparatus comprising: a charge pump for boosting a battery voltage to obtain the drive voltage; a current source coupled directly to the drive voltage and providing directly a desired drive current to one or more directly coupled LEDs; characterised by: a headroom detect circuit for providing a signal indicative of a headroom voltage measured across the current source; and, a controller for adjusting the drive voltage responsive to information in the signal to maintain the headroom voltage within preferred maximum and minimum voltage levels.

Preferred embodiments of the present invention resolve many of the problems associated with voltage boosters and offers a low cost solution for powering multiple LEDs while minimizing overall long-term total power dissipation in battery-powered devices such as cellular telephones.

Preferred embodiments of the present invention provide a voltage booster that automatically adjusts output voltage based on variations in load. Thus, the output voltage level need not be preset. Instead, the preferred embodiments provide a means for monitoring headroom voltage and maintaining an output voltage sufficient to drive an LED load that includes a variable number of LEDs.

Preferred embodiments of the present invention additionally provide a combination of current source and voltage supply, simplifying IC design. In providing for monitoring of the headroom voltage, an associated reduction in input and outputs from a driver IC is also obtained.

These and other aspects and features of the present invention will become apparent to those ordinarily skilled in the art upon review of the following description of specific embodiments of the invention in conjunction with the accompanying figures, wherein:

Figure 1 is a schematic drawing of a prior art voltage booster;

Figure 2 is a schematic drawing of an example of a voltage booster according to an embodiment of the present invention;

Figure 3 is a graph plotting boost voltage, LED current and control against time for an exemplary embodiment of the present invention.

Figure 4 is a schematic drawing showing an example of headroom detector as implemented in certain examples of embodiments of the present invention;

Figure 5 is a schematic representation of an example of an embodiment of the present invention showing a boost regulator incorporating a headroom detection circuit block; and

Figure 6 is a graphical representation of boost voltage varying with changing LED loads in one example of an embodiment of the present invention.

Embodiments of the present invention will now be described in detail with reference to the drawings, which are provided as illustrative examples so as to enable those skilled in the art to practice the invention. Notably, the figures and examples below are not meant to limit the scope of the present invention. Where certain elements of these embodiments can be partially or fully implemented using known components, only those portions of such known components that are necessary for an understanding of the present invention will be described, and detailed descriptions of other portions of such known components will be omitted so as not to obscure the invention. Further, the present invention encompasses present and future known equivalents to the components referred to herein by way of illustration. For the sake of clarity and consistency, reference numerals will be repeated in various drawings where elements of the drawings are of similar construction and purpose.

For the sake of clarity and to better illustrate various aspects of the invention, exemplary embodiments of the invention include one or more white LEDs ("WLEDs") adapted to provide, for example, backlighting for an LCD. In general, references to an LED in this description assume that the LED possesses characteristics (such as operating voltage and current) closely related to the characteristics of a typical WLED. It will be appreciated, however, that some embodiments of the invention make use of other light sources including colored LEDs and combinations of white and colored LEDs. It will be further appreciated, by one skilled in the art, that embodiments of the invention accommodate variations in the specifications of various WLEDs and colored LEDs to incorporate differences in type, structure and form of the implementation, including LED loads comprising multiple LEDs connected in serial, parallel or some combination of parallel and serial. It will be also appreciated that embodiments of the invention may be applied to drive loads other than LED loads.

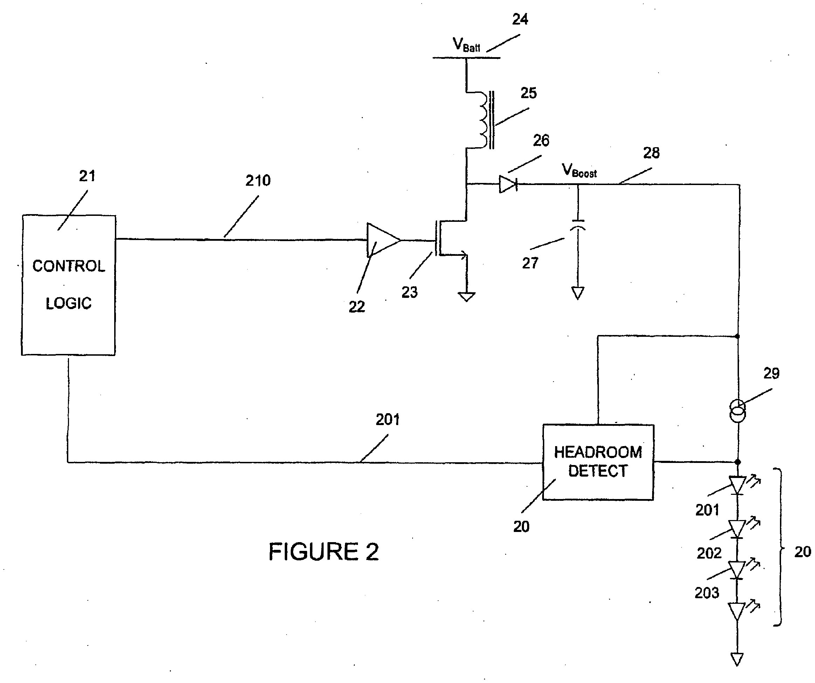

Referring to Figure 2, an example of a voltage booster according to one embodiment of the present invention is depicted. In the example shown in Figure 2, control logic 21 provides a switching signal 210 that drives a FET 23 through a driver device 22. As described above, by switching the FET 23, capacitor 27 may be charged through inductor 25 to provide a boosted voltage 29 for powering a plurality of LEDs 20. In the example embodiment of the invention, the plurality of LEDs typically receives a constant current from a current source 29, electrically connected between the boosted voltage 29 and the plurality of LEDs.

In certain embodiments, the current source 29 can be included on an IC that also includes voltage booster components and control logic 21. The advantages of this arrangement will become apparent in the following discussion and include efficiencies of IC layout and usage.

In the example provided in Fig 2, a headroom voltage may be measured as a voltage difference across the current source 29. This headroom voltage is typically monitored by a headroom detect component 20. Upon detecting an increase in headroom voltage above a preferred maximum voltage threshold, the detect component 20 provides a headroom signal 201 to the control logic 21. The control logic typically responds to information provided in the headroom signal 201 by altering characteristics of the switching signal 210. The characteristics include amplitude, frequency and duty cycle of the switching signal 210.

In certain embodiments, the headroom signal is a binary signal indicating either that headroom voltage exceeds a preferred threshold voltage level or that the headroom voltage is not greater than the headroom voltage. In other embodiments, the headroom signal provides other information related to level of the headroom voltage, the other information being encoded using any appropriate coding method including pulse width modulation, pulse frequency modulation, BCD and ASCII.

In certain embodiments, the control logic 21 alters the switching signal 210 to reverse the change in measured headroom voltage. In these embodiments, a declining headroom voltage that crosses the preferred threshold voltage may cause the control logic 21 to alter the switching signal 210 such that the capacitor 27 is charged more rapidly to increase the headroom voltage. Likewise, an increasing headroom voltage that crosses the preferred threshold voltage may cause the control logic 21 to alter the switching signal 210 such that the capacitor 27 is charged less rapidly to decrease the headroom voltage. In at least some embodiments, the operation of the controller may be configured using parameters provided in various manners including at time of IC manufacture, during device initialization, through external programming and by software control.

It will be appreciated that the boost voltage 28 required to drive any combination of LEDs may be calculated as the sum of the headroom voltage and the voltages required to drive the maximum number of serially connected LEDs. Because the boost voltage is typically controlled to obtain a preferred headroom voltage level, the present invention provides a method for automatically adjusting boost voltage to accommodate voltage requirements of the plurality of LEDs 20 regardless of the quantity of LEDs in the plurality of LEDs. Addition of one or more LEDs to the plurality of LEDs 20 may increase the voltage level needed to drive the LEDs at the constant current provided by the current source 29. In the example of Figure 2, insufficient boost voltage is typically reflected in the headroom voltage and the control logic 21 reacts to the associated information in the headroom signal to increase boost voltage 28.

In those embodiments where the current source 29 is connected such that it is positioned electrically between the boost voltage and the plurality of LEDs 20, various advantages accrue. For example, such arrangement of components facilitates measurement of the headroom voltage within an IC. Additionally, the IC need provide only a single output for connection to one end of the plurality of LEDs 20 with the other end of the plurality of LEDs 20 being connected directly to ground. This latter configuration minimizes the number of input and output connections ("I/O") required on the IC to drive the plurality of LEDs. Associated with the reduction of I/O is a minimizing of the current flowing through the IC.

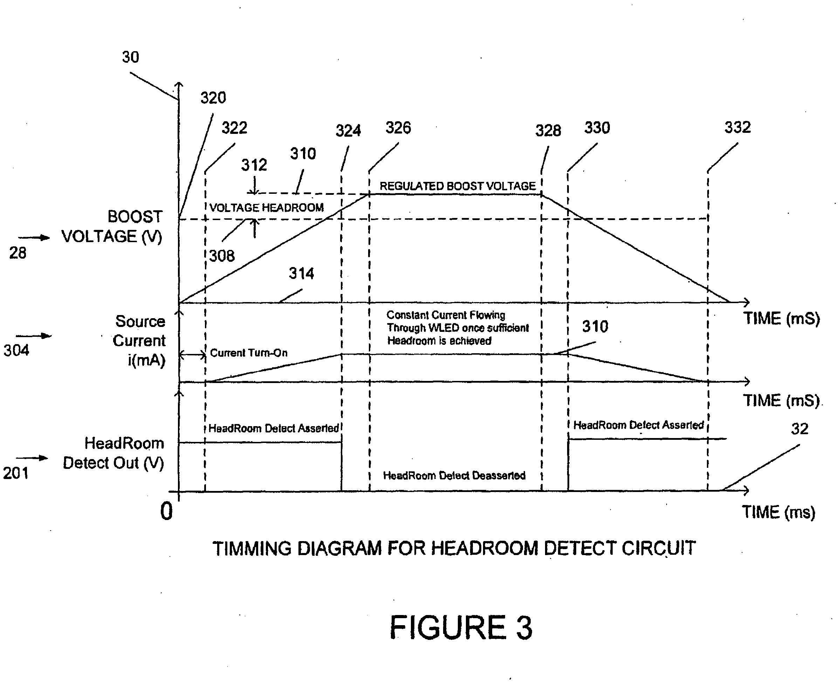

Now referring also to Figure 3, timing relationships of various signals in the example embodiment shown in Figure 2 may be better understood. The timing diagram of Figure 3 illustrates the relationship of boost voltage-28, source current 304 and headroom signal 201 against time 32. At a first time 320, when the boost voltage 302 is at a starting voltage level 314, headroom out 201 is asserted indicating that headroom voltage on the current source 29 is less than a preferred threshold level. At some point thereafter, as determined by control logic 21, switching signal 210 is altered to cause voltage boost 28 to increase. It will be appreciated that the frequency and duty cycle of switching signal 210 may be selected to maximize, minimize or otherwise optimize the rate of increase of boost voltage 28. In certain embodiments, sequences of changes in frequency and duty cycle can be implemented to provide a variable rate of increase of boost voltage 28 based on measurements of voltage across the current source 29.

At a second time 324, the rising boost voltage 28 typically causes the headroom voltage to rise until the headroom voltage exceeds a minimum desired headroom voltage threshold 308 and the headroom out signal 201 is cleared. The control logic may cause the headroom voltage 28 to continue to rise until a third time 326, when, in at least some embodiments, voltage regulation begins. Voltage regulation may be implemented using commonly known techniques or by implementing the regulation system described in the related European patent application no. 06720630.0, entitled Regulating Switching Regulators By Load Monitoring.

Increases in headroom voltage may cause the level of the boost voltage 28 to be reduced by the control logic 21. In the example, at a fourth time 328 the level of the boost voltage 28 begins to drop when the switching signal 210 is altered by the control logic 21 to slow charging of the capacitor 27.

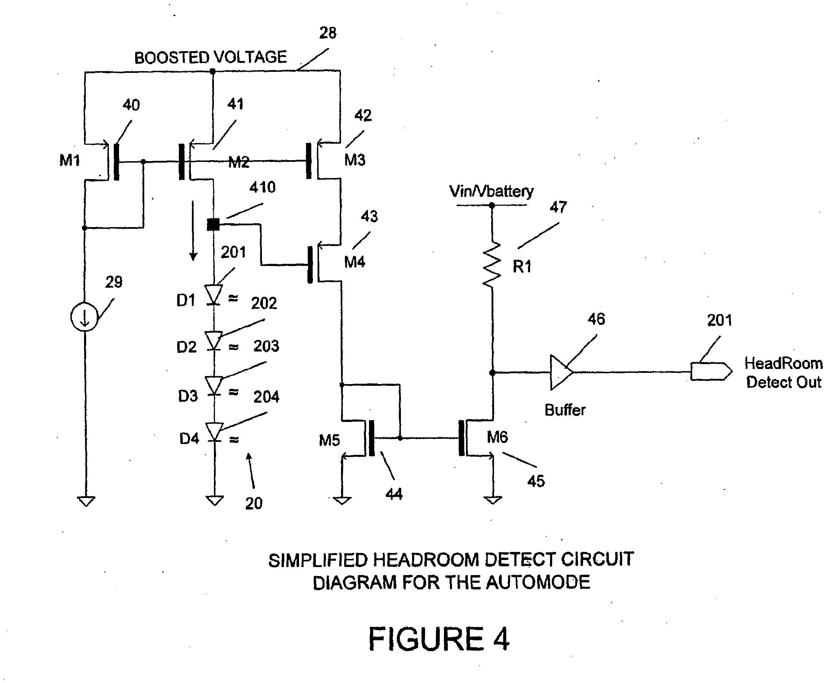

The schematic drawing of Figure 4 shows an example of a headroom detect circuit as implemented in certain embodiments of the invention. In the example, a current source 29 sets current in FET M1 40. This current is mirrored in FET M2 41 and FET M3 42. The current flowing in M3 42 sets a current in FET M5 44 through FET M4 43. M4 43 acts as a switch, being driven from an LED drive output pin 410. Current in FET M6 45 is mirrored as current in FET M5 44, causing a voltage drop across resistor R1 47. A buffer 46 sets headroom detect signal 201 based on the voltage drop measured across R1 47, wherein the buffer 46 provides either an active high or active low control signal as required. As the boost voltage 28 increases and sufficient headroom is attained, headroom signal 201 is cleared. M4 43 turns off as boost voltage 28 is increased, thereby causing M6 45 to turn off. With M6 45 turned off, voltage across R1 47 drops causing the input to the buffer 46 to rise to battery voltage 24 level. This change is detected by buffer 46. By controlling the point of switchover of the buffer 46, the headroom signal 201 may be inverted, signaling that sufficient headroom is present for the circuit to operate.

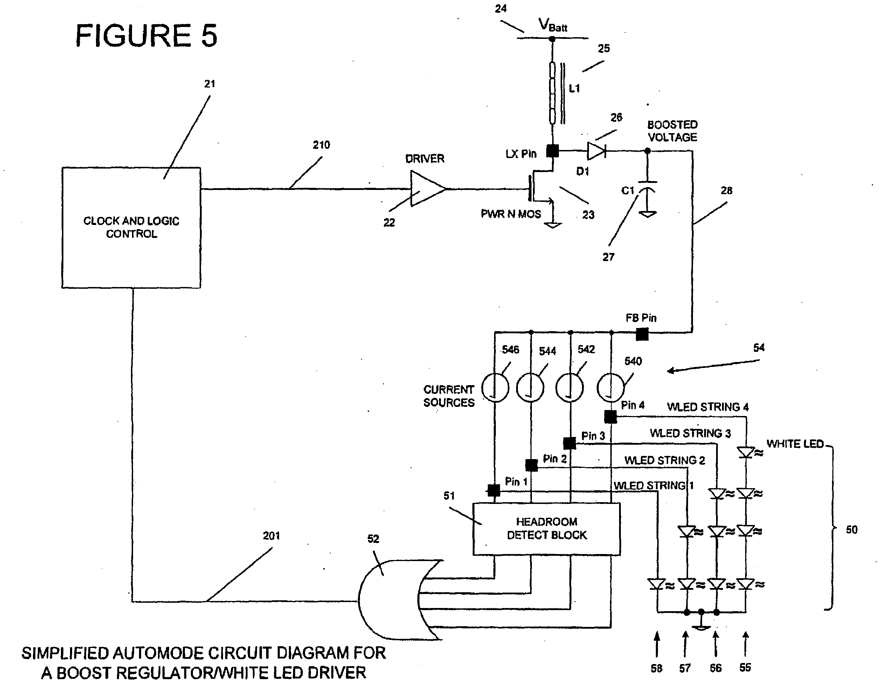

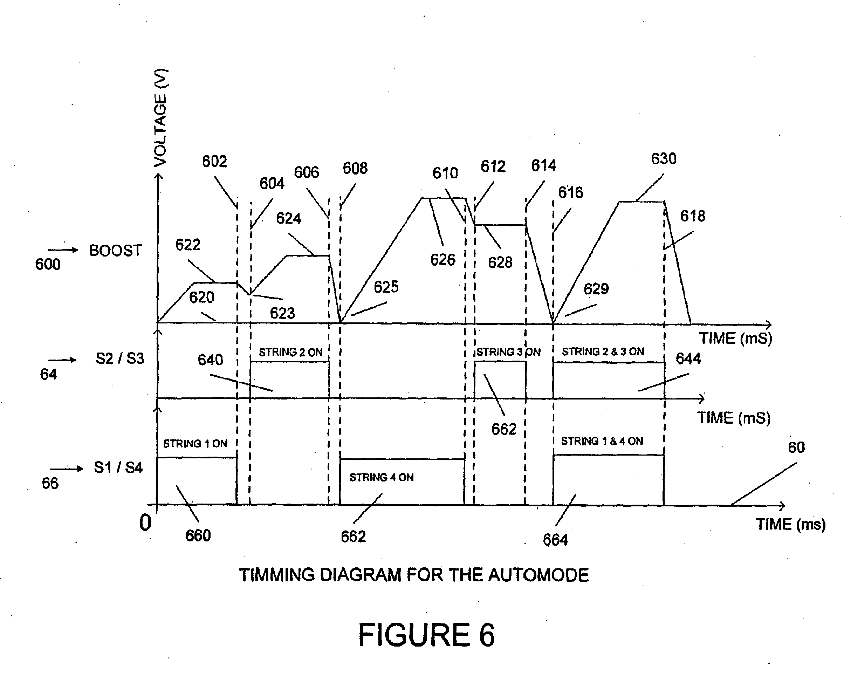

Referring now to Figures 5 and 6, one example of an embodiment is depicted in which a plurality of LED loads 50 are driven from a common boost voltage 28. In this example, the plurality of LED loads 50 comprises four loads, a first load 58 having a single LED, a second load 57 having two serially-connected LEDs, a third load 56 having three serially-connected LEDs and a fourth load 55 having four serially-connected LEDs. Associated with the plurality of LED loads 50 is a plurality of current drivers 54.

It will be apparent to one skilled in the art that each of the plurality of LED loads 55, 56, 57 and 58 can have a different associated operating voltage and that the boost voltage required to operate each of the LED loads 55, 56, 57 and 58 may vary according to the string. In the diagram of Figure 6, the operational state of the each of the LED loads 55, 56, 57 and 58 is depicted at 64 and 66 while the associated value of the boost voltage 58 is shown at 62.

In the example, the first LED load 58 becomes active 660 at time to 600 and the boost voltage 28 rises to provide an operating voltage 622 for one LED and headroom for current source 546. At time t₁ 602, the first LED load 58 becomes inactive and the boost voltage 28 falls accordingly until at time t₂ 604, the second LED load 57 becomes active. Boost voltage 28 rises accordingly to provide an operating voltage 524 for two LEDs and headroom for current source 544. At time t₃ 606, the second LED load 57 becomes inactive and the boost voltage 58 falls accordingly until at time t₄ 608, the fourth LED load 55 becomes active. Boost voltage 58 rises accordingly to provide an operating voltage 626 for four LEDs and headroom for current source 540. At time t₅ 610, the fourth LED load 55 becomes inactive and the boost voltage 58 falls accordingly until at time t₆ 612, the third LED load 56 becomes active. Boost voltage 28 levels off at operating voltage 628 to drive three LEDs and headroom for current source 542. At time t₇ 614, the third LED load 56 becomes inactive and the boost voltage 28 falls until at time t₈ 616, all LED loads 55 become active. Boost voltage 28 rises to provide an operating voltage 56 for four LEDs and headroom for current source 540. In this latter condition, the boost voltage level required to drive fourth LED load 55, is sufficient to drive all of LED loads 55, 56, 57 and 58. Finally at time t₉ 618, all LEDs are turned off and boost voltage 28 falls to level 620. In certain embodiments of the invention, the boost regulator limits current during low load conditions during transitions of the boost voltage 28.

It should be apparent from the operation of the latter example, that aspects of the invention provide, not only for automatic selection of boost voltage, but also for dynamic selection of boost voltage. This feature of the invention provides not only flexibility in design, but also optimizes power consumption in devices using an embodiment of the present invention. The power consumption can be minimized because the headroom voltage can be maintained at the minimum level required by operating conditions.

## Claims

1. A method for controlling a drive voltage for driving a load (20) comprising the steps of:
providing a drive voltage to a current source (29), the current source (29) driving a load (20) and positioned electrically between the drive voltage and the load (20);
**characterised by**:
measuring a headroom voltage across the current source (29); and,
adjusting the drive voltage to maintain the headroom voltage within preferred maximum and minimum voltage levels.

2. A method according to claim 1, wherein the load (20) comprises one or more LEDs (201,202,203).

3. A method according to claim 1 or claim 2, wherein the drive voltage is provided by a voltage booster controlled by a switching signal (210).

4. A method according to claim 3, wherein the step of adjusting includes modifying selected characteristics of the switching signal (210) based on the measured headroom voltage.

5. A method according to claim 4, wherein the characteristics include switching frequency and duty cycle.

6. A method according to any of claims 1 to 5, wherein the step of measuring includes generating a headroom signal (201) representative of the measured headroom voltage.

7. A method according to claim 6, wherein the step of adjusting includes controlling a voltage booster responsive to the signal (201).

8. An apparatus for controlling a drive voltage for driving a load (20), the apparatus comprising:
a charge pump for boosting a battery voltage to obtain the drive voltage; a current source (29) coupled directly to the drive voltage and providing directly a desired drive current to one or more directly coupled LEDs (201,202,203);
**characterised by**:
a headroom detect circuit (20) for providing a signal (201) indicative of a headroom voltage measured across the current source (29); and,
a controller (21) for adjusting the drive voltage responsive to information in the signal (201) to maintain the headroom voltage within preferred maximum and minimum voltage levels.

9. An apparatus according to claim 8, wherein the signal is an analog signal.

10. An apparatus according to claim 8 or claim 9, wherein the signal is a digital signal.

11. An apparatus according to claim 10, wherein the signal is a binary signal.

12. An apparatus according to claim 10, wherein the signal is a pulse code modulated signal.

13. An apparatus according to any of claims 8 to 12, wherein the signal is a frequency code modulated signal.

14. An apparatus according to any of claims 8 to 13, wherein the charge pump is controlled by a switching signal (210) and wherein the controller adjusts the drive voltage by modifying one or more characteristics of the switching signal (210).

15. An apparatus according to claim 14, wherein the characteristics include amplitude, frequency and duty cycle.

## Patentansprüche

1. Verfahren zum Steuern einer Ansteuerspannung zum Ansteuern einer Last (20), mit den Schritten:
Liefern einer Ansteuerspannung zu einer Stromquelle (29), wobei die Stromquelle (29) eine Last (20) ansteuert und elektrisch zwischen der Ansteuerspannung und der Last (20) angeordnet ist;
**gekennzeichnet durch**:
Messen einer Aussteuerungsreservespannung über der Stromquelle (29); und
Einstellen der Ansteuerspannung, um die Aussteuerungsreservespannung innerhalb bevorzugter maximaler und minimaler Spannungspegel zu halten.

2. Verfahren nach Anspruch 1, wobei die Last (20) eine oder mehrere LEDs (201, 202, 203) umfasst.

3. Verfahren nach Anspruch 1 oder Anspruch 2, wobei die Ansteuerspannung durch einen Spannungsverstärker geliefert wird, der durch ein Schaltsignal (210) gesteuert wird.

4. Verfahren nach Anspruch 3, wobei der Schritt des Einstellens das Modifizieren von ausgewählten Eigenschaften des Schaltsignals (210) auf der Basis der gemessenen Aussteuerungsreservespannung umfasst.

5. Verfahren nach Anspruch 4, wobei die Eigenschaften Schaltfrequenz und Tastverhältnis umfassen.

6. Verfahren nach einem der Ansprüche 1 bis 5, wobei der Schritt des Messens das Erzeugen eines Aussteuerungsreservesignals (201) umfasst, das die gemessene Aussteuerungsreservespannung darstellt.

7. Verfahren nach Anspruch 6, wobei der Schritt des Einstellens das Steuern eines Spannungsverstärkers in Reaktion auf das Signal (201) umfasst.

8. Vorrichtung zum Steuern einer Ansteuerspannung zum Ansteuern einer Last (20), wobei die Vorrichtung umfasst:
eine Ladungspumpe zum Verstärken einer Batteriespannung, um die Ansteuerspannung zu erhalten;
eine Stromquelle (29), die direkt mit der Ansteuerspannung gekoppelt ist und direkt einen gewünschten Ansteuerstrom zu einer oder mehreren direkt gekoppelten LEDs (201, 202, 203) liefert;
**gekennzeichnet durch**:
eine Aussteuerungsreservedetektionsschaltung (20) zum Liefern eines Signals (201), das eine über der Stromquelle (29) gemessene Aussteuerungsreservespannung angibt; und
eine Steuereinheit (21) zum Einstellen der Ansteuerspannung in Reaktion auf Informationen im Signal (201), um die Aussteuerungsreservespannung innerhalb bevorzugter maximaler und minimaler Spannungspegel zu halten.

9. Vorrichtung nach Anspruch 8, wobei das Signal ein analoges Signal ist.

10. Vorrichtung nach Anspruch 8 oder Anspruch 9, wobei das Signal ein digitales Signal ist.

11. Vorrichtung nach Anspruch 10, wobei das Signal ein binäres Signal ist.

12. Vorrichtung nach Anspruch 10, wobei das Signal ein impulscodemoduliertes Signal ist.

13. Vorrichtung nach einem der Ansprüche 8 bis 12, wobei das Signal ein frequenzcodemoduliertes Signal ist.

14. Vorrichtung nach einem der Ansprüche 8 bis 13, wobei die Ladungspumpe durch ein Schaltsignal (210) gesteuert wird und wobei die Steuereinheit die Ansteuerspannung durch Modifizieren von einer oder mehreren Eigenschaften des Schaltsignals (210) einstellt.

15. Vorrichtung nach Anspruch 14, wobei die Eigenschaften Amplitude, Frequenz und Tastverhältnis umfassen.

## Revendications

1. Procédé pour commander une tension de pilotage d'entraînement d'une charge (20), comprenant les étapes suivantes :
• fourniture d'une tension de pilotage à une source de courant (29), la source de courant (29) entraînant une charge (20) et étant placée électriquement entre la tension de pilotage et la charge (20) ;
**caractérisé par** :
• la mesure d'une tension de marge de sécurité à travers la source de courant (29) ; et
• le réglage de la tension de pilotage pour maintenir la tension de marge de sécurité entre des niveaux préférés de tension maximum et minimum.

2. Procédé selon la revendication 1, dans lequel la charge (20) comprend une ou plusieurs DEL (201, 202, 203).

3. Procédé selon la revendication 1 ou la revendication 2, dans lequel la tension de pilotage est fournie par un amplificateur de tension commandé par un signal de commutation (210).

4. Procédé selon la revendication 3, dans lequel l'étape de réglage comprend la modification de caractéristiques choisies du signal de commutation (210) basée sur la tension de marge de sécurité mesurée.

5. Procédé selon la revendication 4, dans lequel les caractéristiques comprennent la fréquence de commutation et le cycle d'utilisation.

6. Procédé selon l'une quelconque des revendications 1 à 5, dans lequel l'étape de mesure comprend la génération d'un signal de marge de sécurité (201) représentatif de la tension de marge de sécurité mesurée.

7. Procédé selon la revendication 6, dans lequel l'étape de réglage comprend la commande d'un amplificateur de tension associé au signal (201).

8. Dispositif de commande d'une tension de pilotage pour entraîner une charge (20), le dispositif comprenant :
• une pompe de charge pour amplifier une tension de batterie afin d'obtenir la tension de pilotage ;
• une source de courant (29) couplée directement à la tension de pilotage et fournissant directement un courant d'entraînement désiré à une ou plusieurs DEL couplées directement (201, 202, 203) ;
**caractérisé par** :
• un circuit de détection de marge de sécurité (20) pour fournir un signal (201) indicatif d'une tension de marge de sécurité mesurée à travers la source de courant (29) ; et
• un contrôleur (21) pour régler la tension de pilotage en réponse à l'information contenue dans le signal (201) pour maintenir la tension de marge de sécurité entre des niveaux préférés de tension maximum et minimum.

9. Dispositif selon la revendication 8, dans lequel le signal est un signal analogique.

10. Dispositif selon la revendication 8 dans lequel la revendication 9, dans lequel le signal est un signal numérique.

11. Dispositif selon la revendication 10, dans lequel le signal est un signal binaire.

12. Dispositif selon la revendication 10, dans lequel le signal est un signal modulé par impulsion codée.

13. Dispositif selon l'une quelconque des revendications 8 à 12, dans lequel le signal est un signal modulé par fréquence codée.

14. Dispositif selon l'une quelconque des revendications 8 à 13, dans lequel la pompe de charge est commandée par un signal de commutation (210) et dans lequel le contrôleur règle la tension de pilotage en modifiant une ou plusieurs caractéristiques du signal de commutation (210).

15. Dispositif selon la revendication 14, dans lequel les caractéristiques comprennent l'amplitude, la fréquence de commutation et le cycle d'utilisation.
